(19) Europäisches Patentamt

European Patent Office

Office européen des brevets

(11) **EP 2 679 954 A1**

(12) **EUROPEAN PATENT APPLICATION**

(43) Date of publication:
**01.01.2014 Bulletin 2014/01**

(51) Int Cl.:
**G01C 21/16** (2006.01)      **G01S 5/02** (2010.01)
**G01S 19/49** (2010.01)

(21) Application number: **12173532.8**

(22) Date of filing: **26.06.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ST-Ericsson SA**
**1228 Plan-les-Ouates (CH)**

(72) Inventor: **Fleming, Peter**
**Newbury, RG20 8DN (GB)**

(74) Representative: **O'Connell, David Christopher**
**Haseltine Lake LLP**
**Redcliff Quay**
**120 Redcliff Street**
**Bristol BS1 6HU (GB)**

(54) **Sequential estimation in a real-time positioning or navigation system using historical states**

(57)      A sequential estimation method for real-time positioning or navigation systems is performed by, at each iteration: propagating a first state estimate into a state prediction, and then forming a second state estimate, by updating the state prediction using state measurements. The first state estimate is valid at a first time and comprises estimated values of a plurality of state parameters, the plurality of state parameters including at least one state parameter referring to a time earlier than the first time. The second state estimate is valid at a second time and comprises estimated values of said plurality of state parameters, the plurality of state parameters including at least one state parameter referring to a time earlier than the second time. The state measurements comprise measurements relating to state parameters at the second time and measurements relating to state parameters at the time earlier than the second time.

Figure 2

**Description**

This invention relates to a method and system for performing sequential estimation, and in particular for performing sequential estimation in a real-time positioning or navigation system.

Real-time navigation systems typically employ an Extended Kalman Filter (EKF) or other least-squares sequential estimation technique. Variations of the standard EKF exist, such as the Unscented Kalman filter.

In general terms, these techniques operate by estimating time-varying parameters (such as the position, speed and direction of motion in a navigation system) using various measurements, such as measurements from a Global Navigation Satellite System (GNSS) and/or the outputs from accelerometer and gyroscope sensors. These measurements are combined with deterministic and stochastic models and with assumptions about the errors in the measurements and the time-varying nature of the parameters being estimated.

For a real-time navigation system, the estimation process is sequential in nature. That is, at any one instant it is desired to make the best estimate of the current values of the time-varying parameters, based on all current and previous information available at that time. The parameters which describe the current state of the system are incrementally updated in time as new measurements and information become available.

For real-time navigation applications it is usually only the current state of the system which is required. For example, a car driver navigating to a target destination using a satellite navigation device would only want to know the best estimate of the position, speed and direction of motion at the current instant. There would be no advantage in their being provided with an updated estimate of the state some seconds ago. (By contrast, a tracking device provides information about where the device is and where it has been in the past.)

The EKF (and similar algorithms) is a computationally-efficient means of performing sequential estimation in order to generate an optimal, or near-optimal, estimate of the current state of a system, and is commonly and widely used in real-time navigation systems and devices.

The computational efficiency of the Kalman filter and similar algorithms arises at least in part because all received information is, in effect, stored within the system in a very efficient, compressed, form, and propagated forward in time from its actual time of applicability to the current state time.

However, this has disadvantages. Firstly, if information (e.g. a GNSS measurement) is added to the system at one time, but it subsequently becomes apparent that that information was erroneous and should not have been added, then the standard formulations of the algorithms make it very difficult to remove the effect of that erroneous information. Consequently, the erroneous information contaminates the state estimates at the current and all future epochs.

Secondly, if any information is delayed, and only becomes available at a time significantly beyond the current state time, then the standard formulations of the algorithms make it very difficult for that old information to be used. That is, in standard sequential estimation techniques, all the information is required in (close to) real-time. In practice, this is not always achievable, in that some measurements, or information, might be provided to the system with too great a latency. By the time this information is received, the system has already propagated the sequential estimation process beyond the time-of-applicability of this newly-received but old information, and so cannot make use of the information.

One specific example of these disadvantages arises in the case of processing Zero Velocity Updates (ZUPTs) in inertial navigation. In standard inertial navigation, a ZUPT occurs at a time when the user is stationary. Knowledge that the unit is stationary means that the specific force sensed by the accelerometers is due solely to gravity, and the output of the gyroscopes is due solely to earth rotation. This information allows the performance of the navigation system to be improved. Even for non-inertial systems, the knowledge that the user is stationary is often beneficial for the system performance. However, an initial determination that the unit is stationary might be highly uncertain, and knowledge that the unit is stationary may only be obtained after a delay that is greater than the period of the estimation.

One way to mitigate this problem is to delay the estimation process itself. That is, rather than estimating the current state, the system can instead provide estimates of the state a few seconds previously. Besides the fact that this will require the storage of the measurement information not yet processed, the fact that the output is always old is obviously a major limitation of this approach. As an alternative way to mitigate the problem, all the measurements which have already been processed can be stored in memory. Then, if old information subsequently becomes available, the estimation process can be run backwards in time to the time-of-applicability of this newly-acquired but old information, the old information can be incorporated (or erroneous data can be removed), and the estimation process can then be run forward in time again. The disadvantages of this approach are that it requires the storage of a relatively large number of measurements, in case the process needs to be run in reverse, and it creates bursts of CPU activity.

US Patent Application 2011/0004404 discloses a technique that addresses only the problem of processing erroneous ZUPTs in an inertial navigation system. In this technique, multiple Kalman filters are executed, with different filters having processed, or not processed, ZUPTs at different times in the recent past. If it subsequently becomes apparent that a ZUPT processed by the primary filter was actually incorrect, the system can switch to one of the filters that did not process the erroneous ZUPT.

According to the present invention, there is provided a method of performing a sequential estimation, the method comprising, at each iteration:

propagating a first state estimate into a state prediction,
wherein the first state estimate is valid at a first time and comprises estimated values of a plurality of state parameters, the plurality of state parameters including at least one state parameter referring to a time earlier than the first time; and forming a second state estimate, by updating the state prediction using state measurements, wherein the second state estimate is valid at a second time and comprises estimated values of said plurality of state parameters, the plurality of state parameters including at least one state parameter referring to a time earlier than the second time, and

wherein the state measurements comprise:

measurements relating to state parameters at the second time; and
measurements relating to state parameters at the time earlier than the second time.

This has the advantage that the sequential estimation can then make use of information that only becomes available after a predictable latency, or of information that can be used to correct previously received information.

According to other aspects of the invention, there are provided an estimation system, and a computer program product for performing the method.

Brief description of drawinas

Figure 1 is a block schematic diagram of a navigation system according to an aspect of the invention.

Figure 2 is a flow chart, illustrating a method according to an aspect of the invention.

Figure 3 schematically illustrates the method of Figure 2.

## Detailed description

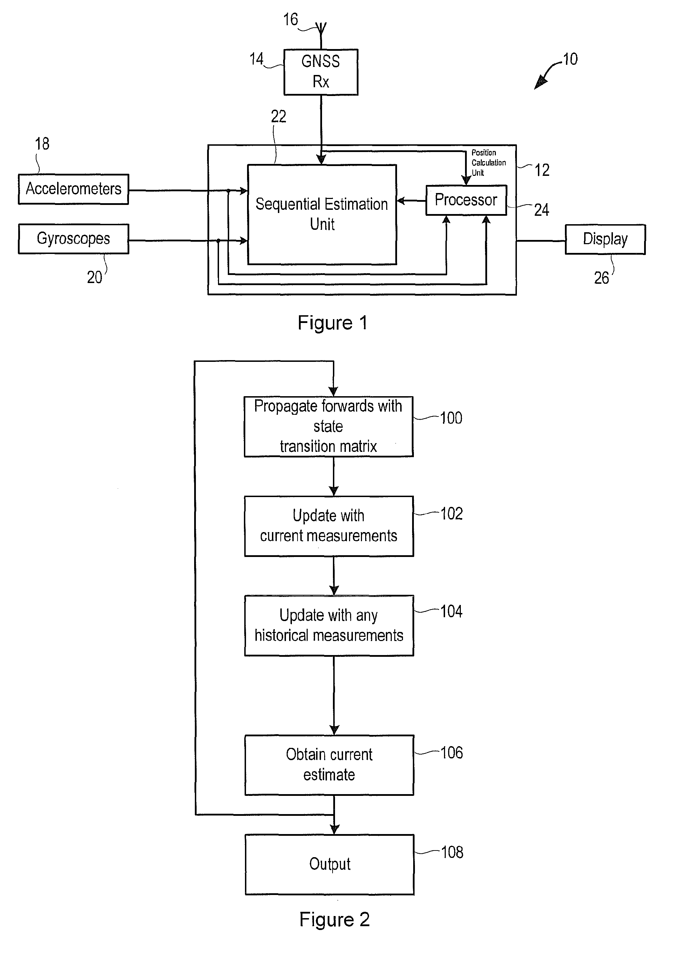

The invention relates to a method of sequential estimation, and to a system for performing such sequential estimation. In one embodiment, the sequential estimation is the sequential estimation of a position of a device. Figure 1 shows a navigation system 10 as an example of a navigation system in accordance with an aspect of the present invention.

The navigation system 10 includes a position calculating unit 12. In this illustrative embodiment, the position calculating unit 12 receives input signals from a Global Navigation Satellite System (GNSS) receiver 14, connected to an antenna 16. The position calculating unit 12 also receives input signals from accelerometers 18 and gyroscopes 20. The position calculating unit 12 includes a sequential estimation unit 22 and a processor 24. An output from the position calculating unit 12 is supplied to a display device 26.

As is generally conventional, the position calculating unit 12 receives input signals from the GNSS receiver 14, accelerometers 18 and gyroscopes 20. These can be pre-processed if required, and are then supplied as inputs to the sequential estimation unit  22, which performs a sequential estimation to generate an output signal representing the position of the device. The output signal is supplied to the display 26 where it can be seen by the user of the device.

In the case of a navigation system, the input signals can represent measured values relating to parameters such as the position, velocity and acceleration of the unit, which will of each course have a degree of uncertainty associated therewith, and the output signal can represent a current estimate of the position of the unit. The output signal might also represent the current velocity of the unit. In this illustrated example, the invention will be described with reference to a navigation system that is concerned with the position of the unit within a horizontal plane. However, in other examples, the system is concerned with the position of the unit in three-dimensional space.

As mentioned above, the use of the invention in a navigation system is only one embodiment of the invention. In other embodiments, the sequential estimation unit can receive input signals representing other variable parameters, and can then generate an output signal representing the value of the parameter whose value is to be estimated.

Figure 2 is a flow chart, illustrating the method performed by the sequential estimation unit. As is conventional in sequential estimation, the method is performed in an iterative fashion, and Figure 2 illustrates the steps performed in one iteration.

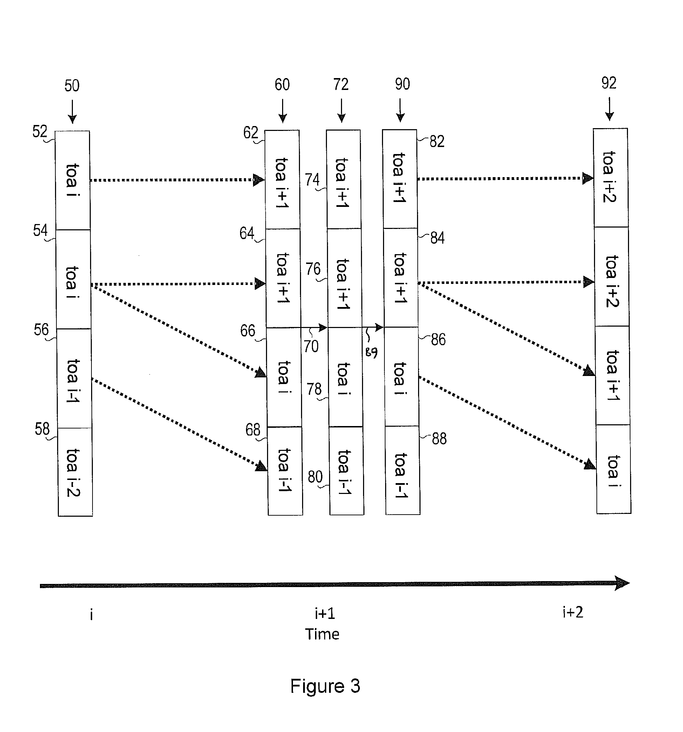

Figure 3 is a schematic representation of the method.

The method is related to a standard Kalman filter, or other sequential estimation techniques, including Extended Kalman filters, Unscented Kalman filters and Information filters. In a standard Kalman filter the state of the system is represented by a vector of variables describing the current state of the system. The Kalman filter is then essentially a predictor-corrector algorithm. The equations which constitute the filter are of two types, namely the prediction, or time update, equations and the corrector, or measurement update, equations. From the estimate of the state at time (i), the Kalman filter first predicts the state at time (i+1) by using a dynamic model of the system, and then corrects, or updates, this estimate by using measurements relating to time (i+1) or, more generally, relating to the interval (i) to (i+1). After each prediction-correction step, the process is repeated. That is, the algorithm works recursively.

By contrast, in the present invention the state vector relates not only to the current state of the system but also to the state, or partial state, of the system at one or more previous update times. That is, some or all of the variables are included in the state vector multiple times, with values relating to the current time and to a number of previous, or historical, times. The prediction step can be thought of as consisting of two parts. In one part, some or all of the variables are propagated forward in time, whereas in the other part some of the variables are simply carried forward (i.e. without being changed). The correction step can also be thought of as consisting of two parts. In one part, the measurements or other information relating to the current state time are used to update the filter (i.e. with this part essentially being the same as in a standard Kalman filter). In the other part, measurements or other information relating to an earlier state time can be removed or added to the filter.

Thus, at time *(i)*, the current estimate of the state vector 50 has been obtained from a previous iteration. As shown in Figure 3, in this embodiment of the invention, the current state vector 50 contains an estimate of the state of the system, i.e. estimates of the current values of certain parameters. The parameters may include a first set of one or more parameters 52, and a second set of one or more parameters 54. Both of these sets of parameters 52, 54 are estimates of the current values of the respective parameters, and thus have the current time i as their time of applicability (toa).

As shown in Figure 3, the current estimate of the state vector also contains estimates of the historic values of certain parameters, namely the parameters of the second set. Specifically, the values making up the current estimate of the state vector include parameters 56 that are estimates of the values of the respective parameters during the immediately preceding iteration, and thus have the time *(i - 1)* as their time of applicability (toa). In addition, the values making up the current estimate of the state vector include parameters 58 that are estimates of the values of the respective parameters during the iteration preceding that one, and thus have the time *(i - 2)* as their time of applicability (toa).

It is noted that it is not a requirement of the invention that the number of duplicated states is the same for all the historical update times. If we denote the number of current states (that is, the number of parameters in the first set plus the number of parameters in the second set) by $N(0)$, and the number of states from k updates previously by $N(k)$, and if we have historical states at m update times, then the only requirements relating to the number of each type of state variable are:

$$m > 0$$

$$N(0) > 0$$

$$N(k) > 0 \qquad \text{for all } k \text{ from } 1 .. m$$

$$N(k) \geq N(k-1) \qquad \text{for all } k \text{ from } 1 .. m$$

It is also noted that it is not a requirement that the state variables are ordered or grouped within the state vector in the way illustrated in Figure 3, that is, with those variables that are duplicated appearing last in the state vector. There are no requirements on the ordering or grouping of the state variables. It will be clear to anyone familiar with Kalman filter implementations, however, that the way in which the variables are ordered and grouped will have a significant effect on how efficiently the processing can be performed.

As shown at step 100 of Figure 2, the current estimate of the state of the system is propagated forwards in time, by means of a state transition matrix, to form a prediction of the state of the system in the next time period (i + 1).

The estimate of the state vector at the time i can be denoted:

$$\hat{x}'_i$$

The uncertainty, or accuracy, of this estimate is expressed through its associated covariance matrix, denoted:

$$C_{\hat{x}'_i}$$

The prediction of the state vector, and its associated covariance matrix, are thus given by:

$$\widetilde{x}_{i+1} = M_{i+1} \bullet \hat{x}'_i$$

and

$$C_{\widetilde{x}_{i+1}} = M_{i+1} \bullet C_{\hat{x}'_i} \bullet M_{i+1}{}^T + Q_{i+1}$$

where:

$M_{i+1}$ is the transition matrix, namely the functional model of how the state parameters vary in time, and
$Q_{i+1}$ is the process noise covariance matrix, which reflects the accuracy of the above functional model.

As regards the current values of the parameters of the first set 52 and the second set 54, the state transition matrix operates as in a conventional Kalman filter. That is, knowledge about the system dynamics is used to predict the respective values 62, 64 of those same parameters at the time ($i$ + 1). For example, given estimates of the velocity and acceleration of a unit at time $i$, it is possible to predict a value for the velocity of the unit at time ($i$ + 1).
The prediction 60 of the state vector at time ($i$ + 1) also includes predicted values 66 for the parameters of the second set during the preceding iteration. That is, these parameters 66 in the prediction 60 at the time ($i$ + 1) have the previous time $i$ as their time of applicability (toa). The prediction 60 of the state vector at time ($i$ + 1) also includes predicted values 68 for the parameters of the second set during the iteration before the immediately preceding iteration. That is, these parameters 68 in the prediction 60 at the time ($i$ + 1) have the time ($i$ - 1) as their time of applicability (toa). Thus, the operation of the state transition matrix is simply to set the parameter values 66 equal to the parameter values 54, and to set the parameter values 68 equal to the parameter values 56. The parameter values 58 in the estimate 50 are discarded.
Although the propagation forwards of the parameters of the second set is described here as being carried out by means of a state transition matrix, it will be apparent that the same result can be achieved in other mathematically equivalent ways, such as simply copying some values from the estimate 50 of the state vector at time i into the prediction 60 of the state vector at time ($i$ + 1).
As shown at step 102 of Figure 2, the prediction of the state of the system at the time ($i$ + 1) is then updated with current measurements, as shown by the arrow 70 in Figure 3, to form an intermediate estimate 72 of the state of the system at the time ($i$ + 1). This updating is carried out in the same manner as in a conventional Kalman filter or the like, and thus is not described in detail. In summary, measurements are received from the external devices such as the GNSS receiver 14, the accelerometers 18 and gyroscopes 20, though it is recognised that these measurements are inevitably subject to uncertainty.
These measurements are used to obtain values for the state parameters, with the measured parameters being related to the state parameters by means of an observation equation design matrix. Thus:

$$A_i \cdot \overline{x}_i = b_i + v_i$$

Where:

$A_i$ — is the design matrix.

$\bar{x}_i$ — is the true values of the state parameters

$b_i$ — is the observed (or measured) value

$v_i$ — is the measurement residual (or error).

The design matrix, then, relates the measured quantities with the (true values of the) state parameters (although the true values of the state parameters and the measurement errors can never be known exactly.) We also specify the variance measurement error, which reflects the accuracy of the measurement:

$$\sigma_i^2$$ variance of the measurement error

The measurement is added to the filter, to give a new estimate of the state vector and its associated covariance matrix, as follows:

$$\hat{x}_i' = \tilde{x}_i + G_i \cdot \left( b_i - A_i \cdot \tilde{x}_i \right)$$

$$C_{\hat{x}_i'} = C_{\tilde{x}_i} - G_i \cdot A_i \cdot C_{\tilde{x}_i}$$

where the Gain Matrix $G_i$ is given by:

$$G_i = C_{\tilde{x}_i} \cdot A_i \cdot \left( \frac{1}{\sigma_i^2} + A_i \cdot C_{\tilde{x}_i} \cdot A_i^T \right)^{-1}$$

In the above, (b - Ax) is the difference between the measured value and the value predicted from the current estimate of the state vector. The Gain Matrix defines how much of this discrepancy is used to adjust the estimated state vector. That is, it defines how much the measurement is allowed to modify the estimated state parameters. For example, if we have a measurement which we think is of very high quality (i.e. it has a very small variance) then the Gain matrix will be "large", and the estimated state vector after having included the measurement will be driven by the measurement rather than the propagated value. Conversely, if we think the measurement is very low quality (i.e. it has a very large variance) then the Gain matrix will be "small", and the estimated state vector after having included the measurement will be very little different from that before including the measurement.

The algorithm outlined above is thus used to form intermediate estimates 74, 76 of the first and second sets of parameters, based on the predicted values 62, 64 that were obtained based on the previous estimates and the knowledge of the system dynamics, and based on the newly input measurements. Similarly, this algorithm generates intermediate estimates 78, 80 of the historical parameter values in the state vector.

If more than one current measurement is received, the updating described above can be performed multiple times. Equivalently, a suitable updating can be used to include multiple measurements.

At step 104 of Figure 2, the provisional estimate 72 is further updated based on newly input historical measurements. This applies when a measurement value only becomes available after its time of applicability. For example, calculation might be required in order to obtain a measurement value, or the measurement value might only be known with a sufficiently high degree of precision after a period of latency that allows for confirmation.

The same algorithm as described above with reference to step 102 is thus used to form new estimates 82, 84 of the first and second sets of parameters, based on the intermediate estimates 74, 76, and based on the newly input historical measurements. Similarly, this algorithm generates new estimates 86, 88 of the historical parameter values in the state vector.

If more than one historical measurement is received, the updating described above can be performed multiple times. Equivalently, a suitable updating can be used to include multiple measurements.

While reference is made here to updating the estimate based on newly received measurements, it will be apparent that the estimate can be similarly updated by removing previously received measurements, in an exactly analogous procedure.

Thus, as shown by the arrow 89 in Figure 3, a new estimate 90 of the state of the system at the time (i + 1) is formed from the intermediate estimate 72.

Updating the filter with a measurement, whether the measurement is current or historical, and whether the measurement is being added or removed, will, in general, affect the current estimate of all the states, both current and historical.

Although steps 102 and 104 are shown separately here, it will be understood that there is no requirement to add the newly input current measurements before the newly input historical measurements. The newly input historical measurements can be added before the newly input current measurements, or the individual newly input historical measurements and newly input current measurements can be added in any convenient order.

There is therefore obtained an estimate 90 of the state vector at the time (i + 1), made up of the estimate of the state of the system comprising the estimates 74, 76 of the values of the parameters of the first and second sets, plus the updated historical values 82, 84.

As shown at step 106 of Figure 2, this estimate 90, and in particular the estimates 74, 76 of the values of the parameters of the first and second sets, can then be used as the output of the system, as shown at step 108 of Figure 2.

As described above, the process then proceeds to the next iteration, with the estimate 90 being used as the basis for forming the prediction of the state of the system at the next time ($i + 2$).

The invention will now be illustrated in more detail with reference to a first example implementation, which relates to a Global Positioning System (GPS) or other GNSS navigation system, in which it is desired to use Zero Velocity Updates (ZUPT) in order to improve the accuracy of the estimation of the GPS receiver's oscillator frequency offset.

In some inertial navigation systems, a ZUPT occurs at a time when the user is stationary (usually deliberately so). The fact that the unit is stationary means that the specific force sensed by the accelerometers is due solely to gravity, and the true output of the gyroscopes is due solely to earth rotation. This information allows the performance of the navigation system to be improved. Even for non-inertial systems, the knowledge that the user is stationary is often beneficial for the system performance. For example, in difficult GNSS environments the knowledge that the user is stationary can be used to improve the accuracy of the estimate of the oscillator frequency offset, which can result in improved navigation performance.

In automotive navigation systems intended for mass market use, it is not acceptable to require the introduction of deliberate periods during which the user is stationary. Hence, in order to get the best possible performance from the system, use of natural or opportunistic periods of being stationary, such as when the vehicle is waiting at traffic lights, is highly beneficial. Clearly, then, it is important that these natural periods of being stationary can be detected. It is common for the output of accelerometers and gyroscopes to be used to detect such stationary periods. Techniques for detecting when the user is stationary usually rely on the use of some sort of threshold test. Clearly, two forms of mistake can be made in such cases. One form of mistake is where the user actually was stationary but the algorithm failed to recognise this fact. The other is where the user was actually in motion but the algorithm identified this as being a stationary period. In the former case, the performance of the system will be lower than it could have been because not all possible information was utilised. In the latter case, incorrect information has been processed, which will degrade the performance of the system.

The performance of the stationary detection algorithm is compromised by the presence of vehicle vibrations (e.g. vibrations from the engine, air conditioning unit, and audio-system speakers). The detection of when the vehicle was, and was not, stationary can often be achieved more reliably if a latency of a few seconds is introduced into the system. That is, the motion state can be more reliably determined some time after the event, since it can make use of data which is forward in time of the period under consideration. The use of such delayed information is usually not possible in a standard sequential estimation process.

In this particular example, we assume that the reliable detection of a ZUPT might require a latency of up to 4 seconds, whereas the measurement updates occur once every second. In this case, the complete state vector (i.e. including both current and historical states) is assumed to consist of the following twenty parameters, that is, eight current state variables, three of which are repeated over four iterations:

*E*     which is the Easting at the current update

*N*     which is the Northing at the current update

*A*     which is the Altitude at the current update

*B*      which is the GPS receiver clock bias at the current update

*F*      which is the GPS receiver clock frequency offset at the current update

*SE*     which is the Easting Speed at the current update

*SN*     which is the Northing Speed at the current update

*SA*     which is the Altitude Speed at the current update

$SE_{-1}$     which is the Easting Speed one second previously

$SN_{-1}$     which is the Northing Speed one second previously

$SA_{-1}$     which is the Altitude Speed one second previously

$SE_{-2}$     which is the Easting Speed 2 seconds previously

$SN_{-2}$     which is the Northing Speed 2 seconds previously

$SA_{-2}$     which is the Altitude Speed 2 seconds previously

$SE_{-3}$     which is the Easting Speed 3 seconds previously

$SN_{-3}$     which is the Northing Speed 3 seconds previously

$SA_{-3}$     which is the Altitude Speed 3 seconds previously

$SE_{-4}$     which is the Easting Speed 4 seconds previously

$SN_{-4}$     which is the Northing Speed 4 seconds previously

$SA_{-4}$     which is the Altitude Speed 4 seconds previously

In a standard Kalman filter implementation in this example, the state vector would consist of just the first 8 parameters, that is, just the current state variables. If we denote the (8x8) state transition matrix in the standard case by *S*, and we partition this matrix as:

$$S = \begin{bmatrix} S_{55} & S_{53} \\ S_{35} & S_{33} \end{bmatrix}$$

then the (20x20) state transition matrix for the modified filter, which we denote by P, may be written as follows, where *I* denotes a (3x3) identity matrix and 0 a null matrix:

$$P = \begin{bmatrix} S_{55} & S_{53} & 0 & 0 & 0 & 0 \\ S_{35} & S_{33} & 0 & 0 & 0 & 0 \\ 0 & I & 0 & 0 & 0 & 0 \\ 0 & 0 & I & 0 & 0 & 0 \\ 0 & 0 & 0 & I & 0 & 0 \\ 0 & 0 & 0 & 0 & I & 0 \end{bmatrix} .$$

Clearly, compared with the standard transition matrix, the modified transition matrix is extremely sparse. Furthermore, all the additional non-zero elements are unity. This means that matrix multiplication and other mathematical operations and manipulations can be performed much more efficiently than by simple element-by-element multiplication or operation. For example, multiplication of the state vector and associated covariance matrix by the modified transition matrix can be achieved simply by copying elements, or blocks of elements, from one memory location to another, rather than by actually performing any direct multiplication operations.

In this example, the three state variables that are repeated from previous iterations appear as the last three of the eight current state variables, but this is not a requirement. However, there is an advantage in ordering the state variables in such a way that the transition matrix allows the most efficient processing and memory resource requirements.

Thus, in this example, if, at a particular measurement update time, it becomes known that the user had been stationary a few seconds previously (say, 3 seconds, in this example), then this allows for that information to be added to the filter retrospectively. This can be achieved by adding a set of three 'pseudo-observations' to the filter, either before, after or at the same time as the measurement update, constraining, or limiting, the speed 3 seconds previously to zero in all three axes. In this example, the observation equation design matrix, describing the relationship between the measured parameters and the state parameters, would be:

$$A = \begin{bmatrix} 0 & 0 & 0 & 0 & 0 & 0 & 0 & 0 & 0 & 0 & 0 & 0 & 0 & 0 & 1 & 0 & 0 & 0 & 0 & 0 \\ 0 & 0 & 0 & 0 & 0 & 0 & 0 & 0 & 0 & 0 & 0 & 0 & 0 & 0 & 0 & 1 & 0 & 0 & 0 & 0 \\ 0 & 0 & 0 & 0 & 0 & 0 & 0 & 0 & 0 & 0 & 0 & 0 & 0 & 0 & 0 & 0 & 1 & 0 & 0 & 0 \end{bmatrix}$$

A very similar example can be given for a system incorporating some elements of an inertial measurement unit (IMU). The only difference in this case would be the exact definition of the state variables.

There are also many situations in which information that does not cause any significant concern as to its validity is added to the filter, but which is actually erroneous. In such cases, whether or not information was actually valid can be determined more reliably and powerfully some time after the fact. The current invention provides a means whereby information which was thought to be valid at its time of applicability can be removed from the filter, in a rigorous fashion, if it is subsequently identified as having been invalid. Of course, this does not alter the fact that the erroneous data would have had a detrimental effect on the system performance during the time that it was included in the filter, but the important point is that that degradation can be halted immediately and cleanly.

A second example of the invention thus relates to a GNSS navigation system in which the filter had been updated with a Doppler measurement 2 seconds previously which now is believed to have been erroneous.

In order to allow the replacement of erroneous data received up to 2 seconds previously, when the measurement updates occur once every second, the complete state vector (i.e. including both current and historical states) consists of the following sixteen parameters, that is, eight current state variables, four of which are repeated over two iterations:

E        which is the Easting at the current update

N        which is the Northing at the current update

A        which is the Altitude at the current update

*B*      which is the GPS receiver clock bias at the current update

*F*      which is the GPS receiver clock frequency offset at the current update

*SE*     which is the Easting Speed at the current update

*SN*     which is the Northing Speed at the current update

*SA*     which is the Altitude Speed at the current update

$F_{-1}$    which is the GPS receiver clock frequency offset one second previously

$SE_{-1}$   which is the Easting Speed one second previously

$SN_{-1}$   which is the Northing Speed one second previously

$SA_{-1}$   which is the Altitude Speed one second previously

$F_{-2}$    which is the GPS receiver clock frequency offset 2 seconds previously

$SE_{-2}$   which is the Easting Speed 2 seconds previously

$SN_{-2}$   which is the Northing Speed 2 seconds previously

$SA_{-2}$   which is the Altitude Speed 2 seconds previously

The observation equation design matrix for the measurement in question at the time it was added to the filter is denoted by:

$$A_i^o = \begin{bmatrix} 0 & 0 & 0 & 0 & 1 & a_{Ei}^o & a_{Ni}^o & a_{Ai}^o & 0 & 0 & 0 & 0 & 0 & 0 & 0 & 0 \end{bmatrix}$$

The corresponding weight of the observation is denoted $W_i^o$.

If now, 2 seconds after the measurement had been added to the filter, it is believed that the measurement was erroneous and it is required to remove its effect, then this can be achieved by adding [sic] a measurement to the filter with the following observation equation design matrix and corresponding weight:

$$A = \begin{bmatrix} 0 & 0 & 0 & 0 & 0 & 0 & 0 & 0 & 0 & 0 & 0 & 0 & 1 & a_{Ei}^o & a_{Ni}^o & a_{Ai}^o \end{bmatrix}$$

$$W = -W_i^o.$$

A third example implementation of the invention relates for example to a heading filter using both GNSS and gyroscope measurements. Typically, for mass-market real-time navigation devices, the navigation update interval is one second. For systems which attempt to make use of measurements from accelerometer or gyroscope sensors, the measurement interval can be of the order of 10 ms or less. In principle, it would be possible to perform the sequential estimation at 100 Hz or faster, and for the state vector to be augmented with so-called nuisance variables to model better the effect of various factors which influence the output of the sensors (such as engine vibrations and road noise, for example). For high-end systems, such an approach would be desirable, but for low-cost, mass-market systems this approach would probably be prohibitive in terms of the processing and memory resource requirements of the device and because the low-cost sensors used in such devices would probably be insufficiently robust in terms of the navigation performance of the system.

Usually, therefore, measurements which are available at relatively high rate are often pre-processed before being used in the primary filter, with the actual measurements used to update the filter (typically at 1 Hz) being derived from the higher-rate raw measurements. In this case, it is often the case that the quality of the derived measurements available in, or close to, real-time is lower than the quality that can be obtained by delaying the generation of the derived measurements by a short time. The present invention provides a method whereby it is possible to make maximum use of information as and when it becomes available. That is, different, higher quality, versions of the same derived measurement can be added to the filter in a rigorous fashion, so that the amount of information available from the measurement is, in effect, increased incrementally. Hence, the current invention in effect allows some of the benefits of the high-end approach to be achieved, but without the same level of cost in terms of processing and memory resource requirements and reduced robustness.

Thus, in this example, the raw gyroscope measurements are pre-processed, in order to derive measurements which can be used to update the filter at 1 Hz and which can be considered to relate to the horizontal plane. Each gyroscope derived measurement is available in two versions: a first in (close to) real-time, which is of relatively low quality, and a second, which is of higher quality but which only becomes available with a one-second delay. Thus, in this example the state vector includes 2 seconds of history, and the complete state vector (i.e. including both current and historical states) consists of the following nine parameters, that is, five current state variables, two of which are repeated over two iterations:

$F$      which is the GNSS receiver clock frequency offset at the current update
$H$      which is the Heading at the current update
$S$      which is the forward Speed at the current update
$SA$      which is the Altitude Speed at the current update
$G$      which is the gyroscope offset at the current update
$H_{-1}$      which is the Heading one second previously
$G_{-1}$      which is the gyroscope offset one second previously
$H_{-2}$      which is the Heading one second previously
$G_{-2}$      which is the gyroscope offset one second previously

If, at time $t(i)$, we have a derived gyroscope measurement available, which is a biased measurement of the change in heading over the one-second period just ended, we can write the full observation equation as:

$$A^1 \cdot x_i = b_i^1 + v_i^1$$

where

$A^1$      is the design matrix, given by:
$A^1$      = [0 1 0 0 1 -1 0 0 0]
$x_i$      is the state vector at the current time, i.e. at time $t(i)$

$b_i^1$      is the gyroscope measurement

$v_i^1$      is the gyroscope measurement residual with a corresponding measurement weight denoted $W_i^1$.

This is the measurement that would be used to update the filter at the current time. At the next measurement update, i.e. at time $t(i+1)$, 1 second later, we not only have another derived gyroscope measurement available which is a biased measurement of the change in heading over the one-second period just ended, but we also have an improved version of the measurement we added to the filter at the previous update. The invention now allows us to update the filter with the new, current, measurement and also with the new, improved but delayed, measurement. One way of denoting the process to achieve this (but which can be implemented more efficiently in practice) is to add the following three measurements to the filter at the current update time $t(i+1)$:

$$A^1 \cdot x_{i+1} = b_{i+1}^1 + v_{i+1}^1 \qquad \text{with weight } W_{i+1}^1$$

$$A^2 \cdot x_{i+1} = b_i^2 + v_i^2 \qquad \text{with weight } W_i^2 \text{ and}$$

$$A^2 \cdot x_{i+1} = b_i^1 + v_i'^1 \qquad \text{with weight } -W_i^1$$

where

$A^2$ is the design matrix relating to the 'old' measurements, given by:

$A^2$ = [0 0 0 0 0 1 1 -1 0]

$x_{i+1}$ is the state vector at the current time (i.e. at time $t[i+1]$)

$b_{i+1}^1$ is the current gyroscope measurement

$b_i^2$ is the improved gyroscope measurement relating to the previous update.

That is, the first measurement above is the addition of the first version of the gyroscope measurement relating to the one-second period just ended, the second measurement is the addition of the improved version of the gyroscope measurement relating to the previous one-second period, and the third measurement is the removal of the first version measurement relating to the previous one-second period which was added at the previous update but which has now been superseded.

Another example of this situation is in the case of a GNSS application in an urban environment, where problems can be caused by the effect of satellite signals being reflected off nearby buildings. Clearly, if a signal is received after being reflected, then the measured or derived distance between the user and the satellite will be longer than the true distance. In some cases, the fact that a signal was reflected only becomes apparent some seconds after the event. Often, this is too late, in that the bad measurement has already been included in the system, and the state has already been propagated forward in time. Thus, as above, the inaccurate measurement can be removed and the more accurate measurement can be inserted when the inaccuracy becomes apparent.

A further use of the present invention allows the inclusion, in a rigorous manner, of measurements that relate to a difference in the state of the system over a period of time which is significant compared to the update interval of the filter. Similarly, it allows measurements which cannot be considered to be instantaneous to be added to the filter in a way which can improve accuracy. In the case of a GNSS system, examples of such measurements include "delta range" measurements derived by taking the difference between the carrier phase measurements at two epochs (typically 1 second apart). Other examples include biased measurements of changes in heading derived from gyroscope measurements, and Doppler measurements from attenuated signals which have been obtained by integrating the signals over time periods that are significant relative to the length of one epoch, such that the measurements are best considered as relating to some sort of average state between two or more epochs.

Thus the invention can be further illustrated by a fourth example implementation relating to a filter similar to those described above, but where we are concerned with the use of GNSS Doppler measurements which might be regarded as "smeared" over time, rather than being considered always as relating to an instant of time. In this example, the complete state vector (i.e. including both current and historical states) consists of the following ten parameters that is, five current state variables, all of which are repeated over one iteration:

$F$ which is the GNSS receiver clock frequency offset at the current update

$H$ which is the Heading at the current update

$S$ which is the forward Speed at the current update

$SA$ which is the Altitude Speed at the current update

$G$ which is the gyroscope offset at the current update

$F_{-1}$ which is the GNSS receiver clock frequency offset one second previously

$H_{-1}$ which is the Heading one second previously

$S_{-1}$     which is the forward Speed one second previously

$SA_{-1}$     which is the Altitude Speed one second previously

$G_{-1}$     which is the gyroscope offset one second previously

If we can consider the measurement as being instantaneous, we might write the observation equation design matrix in the form:

$$A = \begin{bmatrix} 1 & a_H & a_S & a_A & 0 & 0 & 0 & 0 & 0 & 0 \end{bmatrix}$$

However, if, for example, the GNSS Doppler measurement has been achieved by integrating the GNSS signal over an appreciable period of time, such that it is better considered as being a measurement of some sort of average state of the system over a preceding period, rather than as being a measurement of some elements of the current, instantaneous state, then this invention allows us to write the observation equation design matrix in the form:

$$A = \begin{bmatrix} (1-k) & (1-k)\cdot a_H & (1-k)\cdot a_S & (1-k)\cdot a_A & 0 & k & k\cdot a_H' & k\cdot a_S' & k\cdot a_A' & 0 \end{bmatrix}$$

Typically, but not necessarily, k would be in the range 0 to 1.

There are two special cases that we note. Clearly, k = 0 relates to the standard case, where the measurement is an instantaneous measurement of elements of the current state). Equally clearly, k = 1 relates to a special case, where the measurement is an instantaneous measurement of elements of the state at the previous update time (that is, each measurement is a delayed measurement of the form described above).

In general, this form of implementation allows us to make use of measurements which are smeared over time. For example, if, in this case, we had a GNSS Doppler measurement which was best considered as being some sort of average value over the preceding one-second update interval, then the observation equation design matrix would be:

$$A = \begin{bmatrix} 0.5 & 0.5\cdot a_H & 0.5\cdot a_S & 0.5\cdot a_A & 0 & 0.5 & 0.5\cdot a_H' & 0.5\cdot a_S' & 0.5\cdot a_A' & 0 \end{bmatrix}$$

There is thus described a method of performing a sequential estimation.

**Claims**

1. A method of performing a sequential estimation, the method comprising, at each iteration:

     propagating a first state estimate into a state prediction,
     wherein the first state estimate is valid at a first time and comprises estimated values of a plurality of state parameters, the plurality of state parameters including at least one state parameter referring to a time earlier than the first time; and
     forming a second state estimate, by updating the state prediction using state measurements,
     wherein the second state estimate is valid at a second time and comprises estimated values of said plurality of state parameters, the plurality of state parameters including at least one state parameter referring to a time earlier than the second time, and

     wherein the state measurements comprise:

     measurements relating to state parameters at the second time; and
     measurements relating to state parameters at the time earlier than the second time.

2. A method as claimed in claim 1, comprising propagating the first state estimate into the state prediction by means of a state transition matrix.

3. A method as claimed in claim 2, wherein the state transition matrix is such that, in the second state estimate, an estimated value of at least one state parameter referring to a time earlier than the second time is derived from an estimated value of a state parameter referring to the first time in the first state estimate.

4. A method as claimed in any preceding claim, wherein at least one state parameter in the state prediction is obtained by copying a value of a state parameter in the first state estimate.

5. A method as claimed in any preceding claim, wherein the first state estimate comprises at least one respective state parameter referring to each of a plurality of times earlier than the first time.

6. A method as claimed in any preceding claim, wherein the first state estimate comprises a number of state parameters referring to a time earlier than the first time that is smaller than the number of state parameters referring to the first time.

7. A method as claimed in any preceding claim, wherein the measurements relating to state parameters at the time earlier than the second time comprise a measurement that can be obtained only with a latency.

8. A method as claimed in any preceding claim, wherein the measurements relating to state parameters at the time earlier than the second time comprise a correction and replacement of a measurement previously used for updating the state prediction.

9. A method as claimed in any preceding claim, wherein the measurements relating to state parameters at the time earlier than the second time comprise a refinement of a measurement previously used for updating the state prediction.

10. A method as claimed in any preceding claim, wherein the measurements relating to state parameters at the time earlier than the second time comprise a measurement relating to a time period between the first time and the second time.

11. A method as claimed in any preceding claim, comprising a method of positioning, wherein the state measurements are obtained from a GNSS system.

12. A method as claimed in any preceding claim, comprising a method of inertial navigation, wherein the measurements relating to state parameters at the time earlier than the second time comprise Zero Velocity Updates.

13. An estimation system, configured to perform a sequential estimation according to the method as claimed in any of claims 1 to 10.

14. An estimation system as claimed in claim 13, comprising a positioning system, configured to receive state measurements from a GNSS receiver.

15. A computer program product, comprising computer-readable instructions for performing the method as claimed in any of claims 1 to 12.

16

14 — GNSS
Rx

22

10

18

Accelerometers

Gyroscopes

20

Sequential Estimation
Unit

Position
Calculation
Unit

Processor

12

24

Display

26

Figure 1

Propagate forwards with
state
transition matrix

100

Update with
current measurements

102

Update with any
historical measurements

104

Obtain current
estimate

106

Output

108

Figure 2

Figure 3

Europäisches
Patentamt

European
Patent Office

Office européen
des brevets

# EUROPEAN SEARCH REPORT

**Application Number**

EP 12 17 3532

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/318292 A1 (KULIK VICTOR [US] ET AL) 16 December 2010 (2010-12-16) <br> * paragraph [0022] - paragraph [0029] * <br> * paragraph [0032] * <br> * figures 2-4 * | 1-15 | INV. <br> G01C21/16 <br> G01S5/02 <br> G01S19/49 |
| X | US 2005/251328 A1 (MERWE RUDOLPH V D [US] ET AL VAN DER MERWE RUDOLPH [US] ET AL) 10 November 2005 (2005-11-10) <br> * paragraphs [0025], [0039] * <br> * paragraph [0066] - paragraph [0068] * <br> * paragraph [0079] - paragraph [0087] * <br> * figures 2-4 * | 1-15 | |
| X | AJIT GOPALAKRISHNAN ET AL: "Incorporating delayed and infrequent measurements in Extended Kalman Filter based nonlinear state estimation", JOURNAL OF PROCESS CONTROL, vol. 21, no. 1, 1 January 2011 (2011-01-01), pages 119-129, XP055014415, ISSN: 0959-1524, DOI: 10.1016/j.jprocont.2010.10.013 <br> * abstract * * <br> * page 120 - page 122 * | 1-15 | TECHNICAL FIELDS SEARCHED (IPC) <br><br> G01C <br> G01S |

The present search report has been drawn up for all claims

| Place of search | Date of completion of the search | Examiner |
|---|---|---|
| The Hague | 26 November 2012 | Yosri, Samir |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 17 3532

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2012

| Patent document cited in search report | | Publication date | Patent family member(s) | | Publication date |
|---|---|---|---|---|---|
| US 2010318292 | A1 | 16-12-2010 | EP | 2443477 A1 | 25-04-2012 |
| | | | KR | 20120024968 A | 14-03-2012 |
| | | | US | 2010318292 A1 | 16-12-2010 |
| | | | WO | 2010147991 A1 | 23-12-2010 |
| US 2005251328 | A1 | 10-11-2005 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 20110004404 A